(19) Europäisches Patentamt
European Patent Office
Office européen des brevets

(11) Publication number: **0 386 980 A2**

# (12) EUROPEAN PATENT APPLICATION

(21) Application number: **90302326.5**

(22) Date of filing: **05.03.90**

(30) Priority: **07.03.89 GB 8905177**

(43) Date of publication of application:
**12.09.90 Bulletin 90/37**

(84) Designated Contracting States:
**AT BE CH DE DK ES FR GB GR IT LI LU NL SE**

(51) Int. Cl.5: **H02M 3/156**

(71) Applicant: **THORN EMI plc**
**4 Tenterden Street**
**London W1A 2AY(GB)**

(72) Inventor: **Clifford, Ian Harry**
**101, Victoria Street, Osborne Mews**
**Slough, Berkshire, SL1 1PR(GB)**

(74) Representative: **Fleming, Ian Alexander et al**
**THORN EMI Patents Limited The Quadrangle**
**Westmount Centre Uxbridge Road**
**Hayes Middlesex, UB4 0HB(GB)**

## (54) Switched-mode regulator circuit.

(57) A switched-mode regulator circuit (20) is operative on an input unidirectional supply derived by a full wave rectifier (10) from an alternating supply (11) to provide an output unidirectional voltage to a load. The circuit contains switching means (26) for regulating the current drawn from the supply (11) and control means (27) effective, in operation, to render the switching means (26) alternately conductive and non-conductive to maintain the instantaneous magnitude of current drawn from the supply within a range of the instantaneous magnitude of a reference signal. The control means (27) includes means (40, 41, 42, 43; 60, 41, 42, 43) for varying the extent of this range so as to regulate the frequency at which the switching means (26) is rendered alternately conductive and non-conductive.

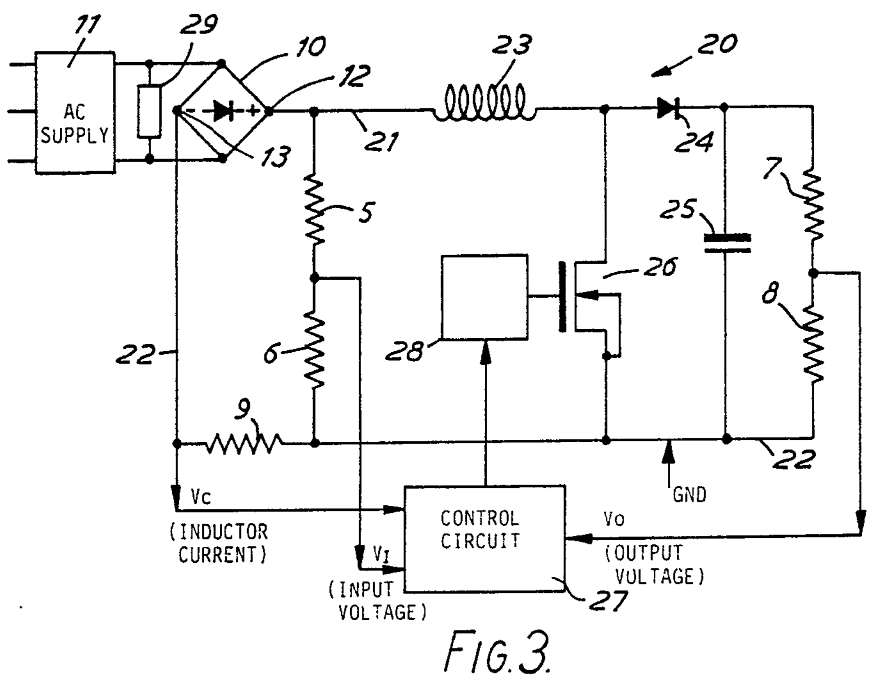


FIG.3.

EP 0 386 980 A2

# SWITCHED-MODE REGULATOR CIRCUIT

This invention relates to a switched-mode regulator circuit suitable for use in the drive circuit of a gaseous discharge lamp.

Such circuits, commonly referred to as conditioning or pre-regulator circuits, are arranged to operate on a unidirectional supply voltage, derived from a full wave rectifier circuit, to provide a unidirectional (substantially constant D.C.) output voltage which can be used to drive, for example a lamp inverter circuit. The pre-regulator circuit ensures that current drawn from the rectified alternating supply, the input current, is in phase with, and of the same waveshape as, the rectified supply voltage i.e. that the circuit presents a load on the power supply which is substantially of unity power factor. A known pre-regulator circuit is described in our European Patent Application, Publication No. 0059053. This circuit has a positive supply line and a negative supply line connected respectively to the positive and negative output terminals of a full wave rectifier circuit. The positive supply rail includes an inductor and a diode in series, with a capacitor connected between the supply lines on the output side of the diode and a semiconductor switch connected across the diode and the capacitor. The inductor and other components are sized to function at the switching frequency of the switch. If the switch is in the "closed", conductive state then the diode is non-conductive and current through the inductor increases, causing the potential across the inductor to oppose that at the positive output terminal of the rectifier circuit. If, on the other hand, the switch is in the "open", non conductive state the diode becomes conductive and current established in the inductor continues to flow, but decreases as the energy stored in the inductor is released.

Operation of the switch is controlled so that the input current is constrained to follow the rectified sinusoidal waveform of the input voltage and thereby maintain the power factor substantially at unity. The current drawn from the AC supply thus corresponds to the inductor current modified by a low pass filter and a full wave rectifier. To that end, the switch is coupled, via a drive circuit, to a comparison circuit with hysteresis. In effect, the comparison circuit compares a signal proportional to the input current with the upper and lower bounds of a control band which is centred on a rectified sinusoidal reference signal derived from, and proportioned to, the input voltage. In operation, with the switch open, the inductor current, and thus the input current decreases until the lower bound of the control band is reached, at which point the output of the comparison circuit changes polarity and the switch is caused to close. The inductor current then increases until the upper bound of the control band is reached and the switch opens. Thus, the inductor current, is constrained to vary in a full wave rectified sinusoidal manner in phase with the input voltage, and exhibits a high frequency saw tooth modulation due to the action of the switch. This saw tooth variation is illustrated in Figure 1 of the accompanying drawings in which curve A represents the inductor current, curve B represents the reference signal and curves C and D represent the upper and lower bounds respectively of the control band centred on curve B. A suitable filter on the AC side of the rectifier removes this modulation such that a sinusoidal input current is drawn from the AC supply.

The frequency of the saw tooth modulation depends, inter alia, on such circuit parameters as load current, load voltage and input voltage. It has been found that in some operational conditions the modulation frequency may vary by an order of magnitude or more, and could fall to a frequency in the audible frequency regime. Such variations of frequency are generally undesirable for three reasons: it makes input filtering more difficult and expensive, if the frequency rises too high it will increase losses and if the frequency is in the audible range the electronics may make an irritating noise.

It is therefore an object of the present invention to provide a switched-mode regulator circuit which substantially alleviates the afore-mentioned problems.

Accordingly there is provided a switched-mode regulator circuit which is operative on an input unidirectional supply derived by a full wave rectifier circuit from an alternating supply to provide an output unidirectional voltage to a load, the circuit containing switching means for regulating the current drawn from said supply and control means effective, in operation, to render said switching means alternately conductive and non-conductive to maintain the instantaneous magnitude of current drawn from the supply within a range of the instantaneous magnitude of a reference signal, said control means including means for varying the extent of said range so as to regulate the frequency at which the switching means is rendered alternatively conductive and non-conductive.

The principle of the invention is illustrated in Figure 2. This represents a graph of current against time for a portion of one mains cycle. Curve $A'$ represents the current drawn from the supply; curve $B'$ represents the reference signal which, in this case, is derived from the input voltage; and curves $C'$ and $D'$ respectively represent the upper and lower bounds delimiting a range around the reference signal. At any point in time the difference between the reference signal curve $B'$ and either one of the curves $C'$ and $D'$ is

the hysteresis value. The invention provides in the circuit means for varying the extent of this range around the reference signal. As can be appreciated from Figure 2, varying the extent of this range has the effect of changing the frequency of the saw tooth modulation.

Accordingly, the circuit provides regulation of the frequency at which the switching means is rendered alternately conductive and non-conductive.

In this way, the control means may be arranged so as to render the switching frequency substantially constant. In order to maintain the power factor of energy drawn from said alternating supply substantially at unity, the instantaneous magnitude of the reference signal may be related to the instantaneous magnitude of said unidirectional supply voltage derived by the rectifier circuit.

The control means can be made responsive to one or more operational parameters of the regulator circuit (eg load current, load voltage, and instantaneous supply voltage), the switching frequency being maintained, in this way, substantially at a fixed, predetermined value, or within a carefully controlled range of values, independently of any change in one or more of said operational parameters.

The control means may include a comparison circuit having first and second input terminals and an output terminal coupled to said switching means wherein a first input signal related to the instantaneous inductor current is applied to one said input terminal and a second input signal is applied to the other input terminal, said second input signal being derived from said reference signal, related to the instantaneous magnitude of said unidirectional supply voltage, modified in accordance with both an output of the comparison circuit and a variable control signal. In effect, the control means, so defined, operates as a Schmitt trigger comparator with a variable hysteresis. The variable control signal may depend on said one or more operational parameters of the regulator circuit and/or an external circuit with which the regulator circuit is operationally associated.

Accordingly the control means may include means for comparing the instantaneous magnitude of the input current with the instantaneous magnitude of the reference signal. Alternatively, or in addition, said switching means being rendered conductive for a first period and being rendered non-conductive for a second period, the control means may include means for limiting at least one of said first and said second periods to a value which is a function of the input voltage. Particularly when said means for limiting consists of means for limiting said second period (during which the switching means is rendered non-conductive) to a value which is a function of the input voltage, this has the advantage that it is not necessary to sense current magnitudes at the lower bound of said range around the reference signal. This enables the circuit to maintain a good input current waveform over a wide range of lower bounds and hence over a wide range of output powers.

In order that the invention may be carried readily into effect specific embodiments thereof are now described, by way of example only, by reference to the accompanying drawings of which:-

Figure 1 illustrates the wave shape of the inductor current and a reference signal employed in circuits as described hereinbefore;

Figure 2 illustrates the wave shape of the inductor current (which is related to the input current) and a reference signal employed in circuits provided in accordance with the present invention;

Figure 3 illustrates a step-up pre-regulator circuit in accordance with the invention;

Figure 4 illustrates a control circuit used in the pre-regulator circuit of Figure 3;

Figure 5 illustrates an alternative control circuit which may be used in the pre-regulator circuit of Figure 3; and

Figure 6 illustrates a pre-regulator circuit in accordance with the invention.

Figure 3 of the drawings shows a switched-mode power supply utilising one form of pre-regulator circuit in accordance with the present invention.

The power supply comprises a full wave rectifier circuit 10 connected to an AC supply 11. The pre-regulator circuit, referenced generally at 20, includes a positive supply line 21 connected to the positive output terminal 12 of the rectifier circuit and a negative supply line 22 connected to the negative output terminal 13 of the rectifier circuit. The negative supply line includes a sense resistor 9, the voltage developing across this resistor 9 being representative of the instantaneous current through an inductor 23. The positive supply line 21 includes the inductor 23 and a diode 24 arranged in series, a capacitor 25 being connected between the supply lines on the output side of the diode. A semiconductor power switch, in the form of a switching transistor 26, is connected across the diode and the capacitor, as shown, and, as in the case of the circuit illustrated in the afore-mentioned European Patent Application No. 0059053, the inductor current rises if the switch is in the "closed", conductive condition and falls if the switch is in the "open", non-conductive condition.

Operation of the switch is regulated by a control circuit, shown generally at 27, which is coupled to the switch via a suitable drive circuit 28, and, by this means, the inductor current and hence also the input

current is constrained to follow the rectified sinusoidal wave form of the input voltage thereby to maintain the power factor of the circuit substantially at unity.

Referring now also to Figure 4 the control circuit 27 includes a comparison circuit 40 which is arranged to function as a Schmitt trigger with variable hysteresis and, in effect, defines the upper and lower bounds of a control band within which the input current is permitted to vary. The control band closely follows, and in this example is centred on, a sinusoidal reference signal which is derived from, and is proportional to, the input voltage. With the switch open, the inductor current falls until the lower bound of the control band is reached at which point the output of the comparison circuit changes polarity and the switch is caused to close. The inductor current then rises until the upper bound of the control band is reached and the switch opens again. Thus, the inductor current is constrained to vary as a rectified sine wave, in phase with the input voltage, and exhibits a high frequency saw tooth modulation due to the action of the switch. As the action of the control means is directly determined by a comparison of the inductor current with the upper and lower bounds of the control band, no comparison for dynamic or accumulative error is required and the control system is largely unaffected by circuitry elements.

The high frequency saw tooth ripple in the inductor current will be removed however by a low pass radio frequency interference filter 29 on the AC side of the rectifier 10 which results in a sinusoidal input current being drawn from the AC supply.

As will be described by reference to Figure 4, the comparison circuit of the present invention is so arranged that the width of the control band, defined by the upper and lower bounds, can be varied thereby to effect control over the frequency of the saw tooth modulation. More specifically, the width of the control band may be varied, during operation, to maintain the modulation frequency at a fixed value, or within a narrow range of values, irrespective of variations of one or more operational parameters of the pre-regulator circuit (e.g. load current, load voltage, supply frequency) and/or of an external circuit with which the pre-regulator circuit is operationally associated.

Referring to Figure 4 the control circuit 27 consists of the comparison circuit in the form of a variable hysteresis Schmitt trigger 40, an error amplifier 41 two multipliers 42, 43 and an inverting amplifier 47. The Schmitt trigger is arranged to switch states dependent on the values of a reference voltage $V_{KI}$ and a hysteresis voltage $V_H$ each derived from the values of the input and output voltages $V_I$, $V_O$ indicated in Figure 3 via respective resistive potential divider arrangements 5, 6 and 7, 8, together with the value of a voltage $V_C$ representative of the inductor current.

The variable hysteresis Schmitt trigger 40 is formed from two voltage comparators 49, 51 a voltage adder 53, a voltage subtractor 55 and a Reset-Set (RS) flip flop 57. The hysteresis signal, $V_H$ is added to and subtracted from the rectified sinusoidal reference signal $V_{KI}$ to give the two reference voltages in $V_+$, $V_-$. These two voltages are applied to the two voltage comparators 49, 51, forming the upper and lower bounds of the control band envelope. The voltage $V_C$ developed across the sense resistor 9, and thus representative of the instantaneous current through the inductor, is applied to the other comparator terminals. The output of the RS flip flop 57 drives the power switch 26 via a buffer circuit indicated as 59. The Set and Reset inputs of the flip flop 57 are controlled by the outputs of the comparators 49, 51.

If the power switch 26 is turned on, the inductor current increases with $V_C$ increasing proportionately until it reaches the upper voltage bound, $V_+$. The output of comparator 49 then flips to logic 1 causing the flip flop 57 to reset to a logic 0, thus turning the power switch off. The inductor current then falls, causing a proportional reduction in the signal $V_C$. When $V_C$ falls to the lower bound $V_-$, the output of comparator 51 flips to logic 1, setting the RS flip flop 57 and turning the power switch on. The cycle then repeats.

The voltage signal $V_C$ which is directly proportional to the inductor current is conditioned by the inverting amplifier 47 so that it of the correct magnitude and polarity to be compared with in $V_+$ and $V_-$.

The reference signal $V_{KI}$ is proportional to the input voltage signal $V_I$, the constant of proportionality being determined by the error amplifier 41 and multiplier 43. The error amplifier 41 compares the output voltage sense signal, $V_O$ with a stable voltage reference $V_{REF}$. The error amplifier 41 has a high gain low pass response, with a cut off frequency significantly below the supply frequency, this resulting in a DC voltage output from the error amplifier 41 whose magnitude is dependent on the load current and load voltage. The voltage multiplier 43 completes the output voltage control feedback loop, calculating the product of the rectified sinusoidal signal $V_I$ and the DC output from the error ampliflier 41.

If the output load suddenly increases, the output voltage will drop, causing the output voltage of the error amplifier 41 to increase. Thus, the magnitude of the reference signal $V_{KI}$ will also increase, though its rectified sinusoidal shape will remain. The mean current fed to the load thus increases, restoring the output voltage to its desired value. Thus the load voltage is regulated such that it is largely constant, i.e. independent of load current and supply voltage.

The response of the error amplifier 41 must necessarily be slow and a separate fast acting protection

circuit (not shown) will be required to avoid large transient voltages across the output if the load is suddenly released. Such an over voltage protection circuit will inhibit the output of the buffer circuit 59 whenever the output voltage exceeds a nominal voltage by a suitable margin.

The hysteresis signal, $V_H$ is derived from the analog voltage multiplier 42. In the step-up converter illustrated in Figure 3 $V_H$ will be proportional to the product of the instantaneous input voltage $V_I$, and the difference between the output voltage, $V_O$, and the instantaneous input voltage, $V_I$.

i.e.

$V_H = K * V_I(V_O - V_I)$ (1)

This algorithm ensures a nearly constant switching frequency, whose absolute value is inversely proportional to the constant K.

It will be appreciated however, that whilst the above algorithm is appropriate for step up converters as shown in Figure 3, an additional dependency of $V_H$ upon load current may be useful in some applications. In particular at low load currents, it is desirable to increase the switching frequency in a controlled manner so as to maintain a good sinusoidal current waveform. The lower bound of the current control band, i.e. curve D′ in Figure 2, otherwise will be distorted for low currents.

Figure 5 illustrates an alternative control system to that shown in Figure 4, designed to give superior control at lower powers whilst maintaining accurate frequency control. Most features of the alternative control system are equivalent to those shown in Figure 4 and are thus correspondingly labelled. The Schmitt trigger circuit 60 differs from that shown in Figure 4 however in that the substractor 55 which is used in the first control system to produce a value of the lower voltage bound V–, together with the associated comparator 51 are replaced by a monostable 61 arranged to produce pulses at time intervals proportional to the value of the input voltage $V_I$.

Thus the upper voltage bound V+ is again defined by the addition of the reference signal $V_{KI}$ and the hysteresis signal $V_H$. The lower voltage bound V– is however replaced by the use of an off time proportional to $V_I$. The operation of this system can be explained as follows:

When power switch 26 is turned on, the inductor current increases, with $V_C$ increasing proportionately, until it reaches the upper voltage bound, V+. The output of comparator 49 then flips to logic 1 and causes the flip flop 57 to reset to a logic 0, thus turning the power switch off. The timer 61 is simultaneously reset. After a time (shown in Figure 2 as E′) proportional to $V_I$, the output of the timer 61 flips from logic 0 to logic 1, setting the flip flop 57 and turning the power switch 26 on. This cycle then repeats. The implementation of this control system is particularly suited to semiconductor integration technology as it avoids detection and measurement of small currents and voltages and said control circuit will require only a unipolar supply voltage.

It is envisaged that the period (shown in Figure 2 as F′) for which the switch 26 is 'on' may also be controlled using a timer system.

The circuit shown in Figure 3 is known as a step-up, or boost regulator circuit since, with the power switch connected between the supply lines, the input current rises when the switch is closed and falls when the switch is open. The present invention is also applicable to another kind of pre-regulator circuit, shown in Figure 6, which is known is the buck boost regulator circuit. This form of regulator circuit differs from the step up or boost regulator circuit in that power switch 26 is connected into the positive supply line and the inductor 23 is connected between the power lines. With this arrangement, the input current rises when the switch is open and falls when the switch is closed. The form and operation of the two alternative controls circuits shown in Figures 4 and 5 will in principle, however, be the same as that for the step-up or boost regulator. In the circuit shown in Figure 6 the control algorithms will differ from those in the step-up converter. Unlike in the step-up converter, the buck boost converter input current is not a smoothed form of the inductor current. Current is drawn from the input only when the power switch is turned on.

To ensure a sinusoidal input current, the inductor current must be centered around a reference signal given by,

$$\text{Reference signal,} = K' \frac{(V_O + V_I)V_I}{V_O} \qquad (2)$$

For constant frequency operation, the hysteresis voltage is given by,

$$\text{Hysteresis voltage, } = K'' \frac{V_O * V_I}{V_O + V_I} \qquad (3)$$

where K′ and K″ are constants.

It will be appreciated that the switched-mode regulator circuits in accordance with the invention described herebefore find particular application in the drive circuits of gaseous discharge lamps. Circuits in accordance with the invention will also find application however in other situations where a load, for example a motor or a television, driven from an AC supply requires an intermediate DC voltage, and it is required that the circuit presents a load on the power supply which is substantially of unity power factor.

## Claims

1. A switched mode regulator circuit operative on an input unidirectional supply derived by a full wave rectifier from an alternating supply to provide an output unidirectional voltage to a load, the circuit containing switching means for regulating the current drawn from said supply and control means effective, in operation, to render said switching means alternately conductive and non-conductive to maintain the instantaneous magnitude of current drawn from the supply within a range of the instantaneous magnitude of a reference signal, said control means including means for varying the extent of said range so as to regulate the frequency at which the switching means is rendered alternately conductive and non conductive.

2. A regulator circuit according to Claim 1 in which the control means is arranged so as to render the switching frequency substantially constant.

3. A regulator circuit according to Claims 1 in which the reference signal is related to the instantaneous magnitude of the unidirectional supply voltage thus maintaining a power factor substantially at unity.

4. A regulator circuit according to any one of the preceding claims wherein the instantaneous value of said range is dependent upon the instantaneous values of the output voltage and the input voltage.

5. A regulator circuit according to any one of the preceding claims including means for sensing the magnitude of the unidirectional voltage at the ouput and for varying the reference signal to maintain the output voltage substantially constant irrespective of variation in the alternating supply.

6. A regulator circuit according to any one of the preceding claims wherein the supply rail includes an inductor and a rectifier in series, with a capacitor connected between the supply lines on the output side of the rectifier and a switch connected across the rectifier and the capacitor such that the output voltage is always above the supply voltage.

7. A regulator circuit according to Claim 6 wherein the instantaneous value of said range is determined by the instantaneous value of a parameter $V_H$, $V_H$ being derived according to the equation.

$V_H = K^*V_I(V_O-V_I)$

where K is a constant, $V_I$ is the instantaneous value of the input voltage and $V_O$ is the instantaneous value of the output voltage.

8. A regulator circuit according to any one of Claims 1 to 5 where the supply rail includes a switch and a rectifier in series, with a capacitor connected between the supply lines on the output side of the rectifier and an inductor connected across the rectifier and the capacitor such that the output voltage is always above the supply voltage.

9. A regulator circuit according to Claim 8 wherein the instantaneous value of said range is determined by the instantaneous value of a parameter $V_H$, $V_H$ being derived according to the equation

$$V_H = K * V_I * \frac{V_O}{V_O + V_I}$$

where K is a constant, $V_I$ is the instantaneous value of the input voltage and $V_O$ is the instantaneous value of the output voltage.

10. A regulator circuit according to any one of the preceding claims wherein said control means includes means for comparing the instanteous magnitude of the input current with the instantaneous magnitude of said reference signal.

11. A regulator circuit according to any one of the preceding claims, said switching means being rendered conductive for a first period and being rendered non-conductive for a second period, wherein said

control means includes means for limiting at least one of said first and said second periods to a value which is a function of the input voltage.

12. A regulator circuit according to Claim 11 wherein said means for limiting consists of means for limiting said second period to a value which is a function of the input voltage.

13. A regulator circuit according to any one of the preceding claims further comprising an overvoltage protection circuit, said overvoltage protection circuit comprising means for comparing the output voltage with a reference voltage to prevent the output voltage exceeding the reference voltage.

14. A regulator circuit according to any one of the preceding claims wherein said control means is realised using an integrated circuit.

Neu eingereicht / Newly filed
Nouvellement déposé

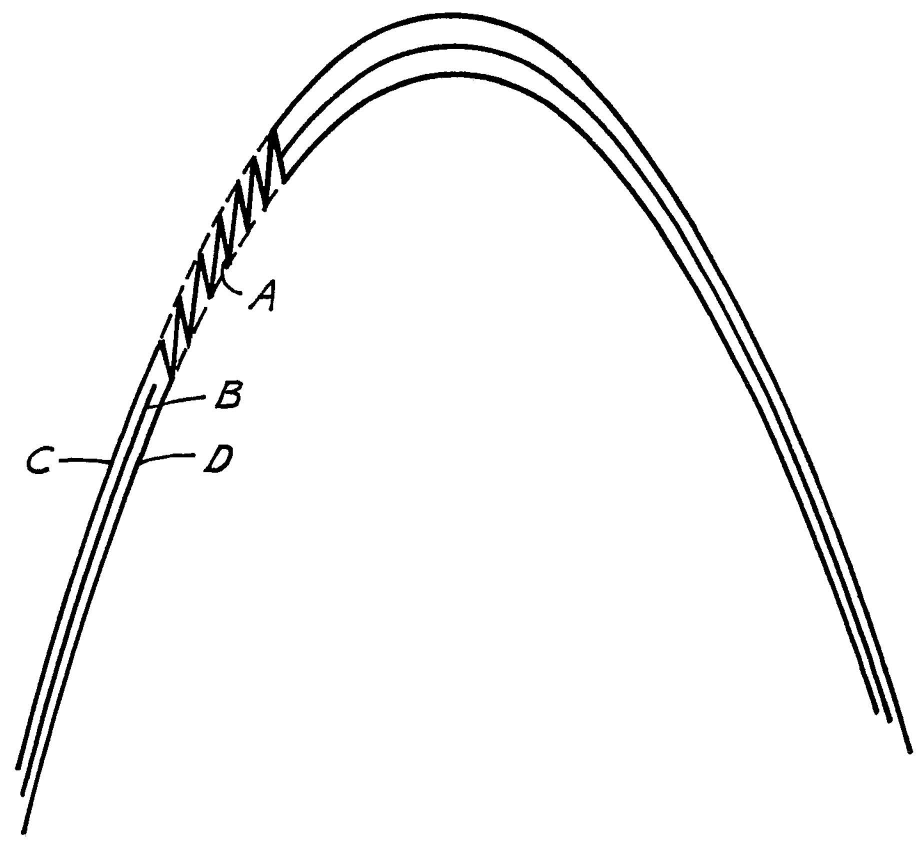


Fig.1

Neu eingereicht / Ne
Nouvellement dé

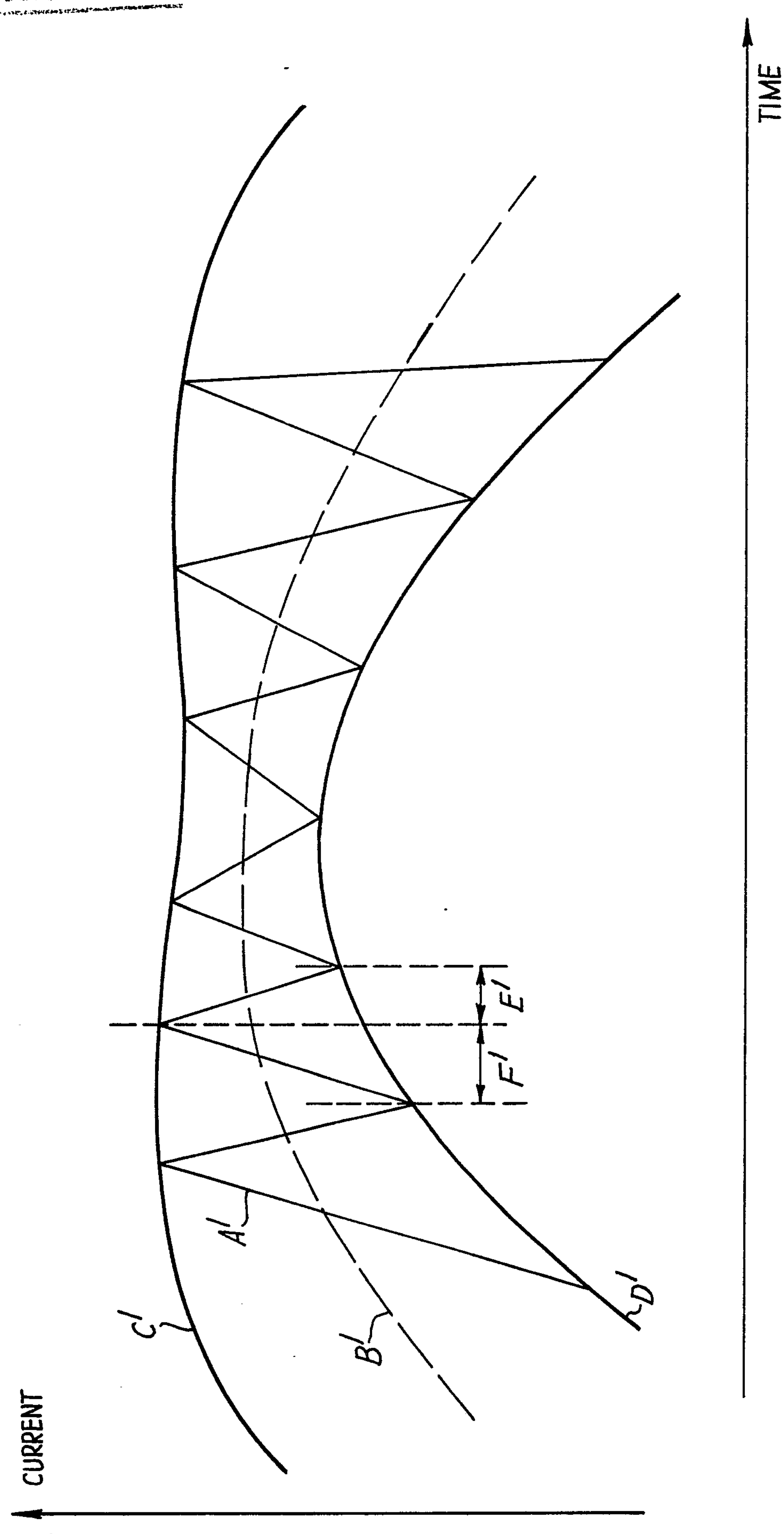


FIG.2.

Neu eingereicht
Nouvellement

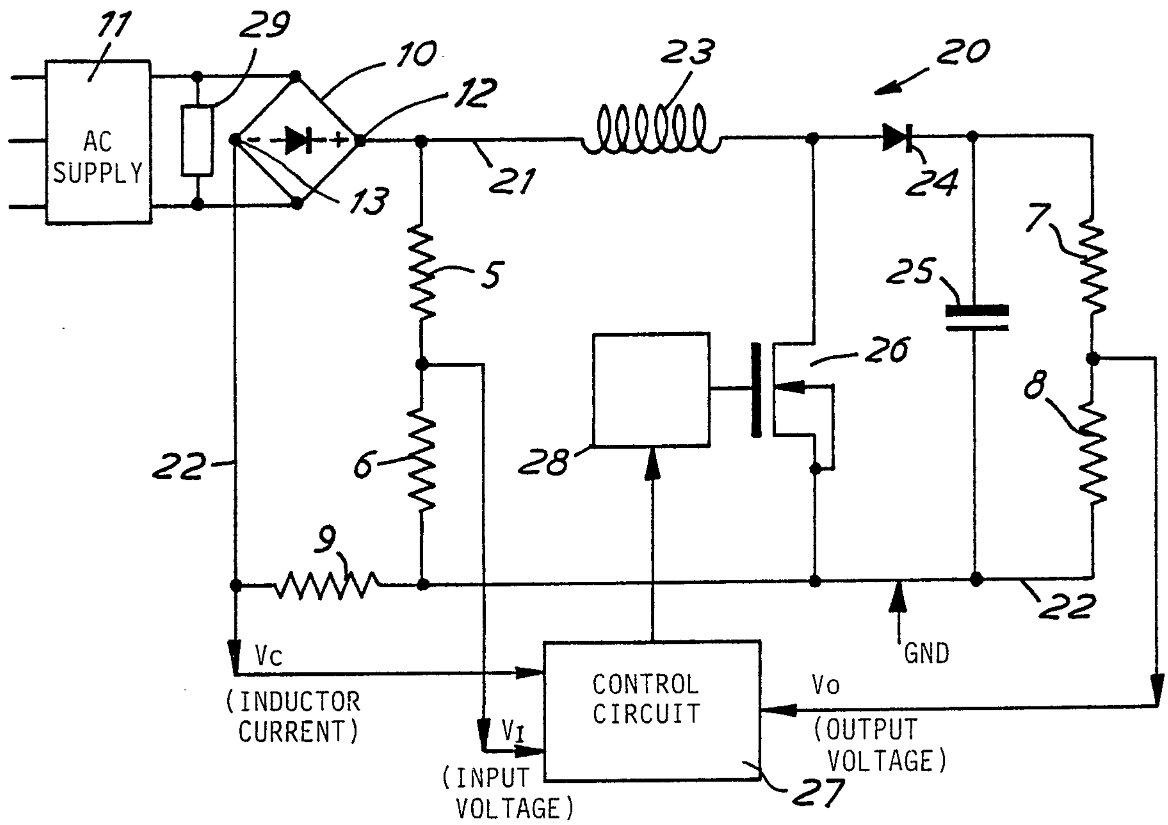


FIG.3.

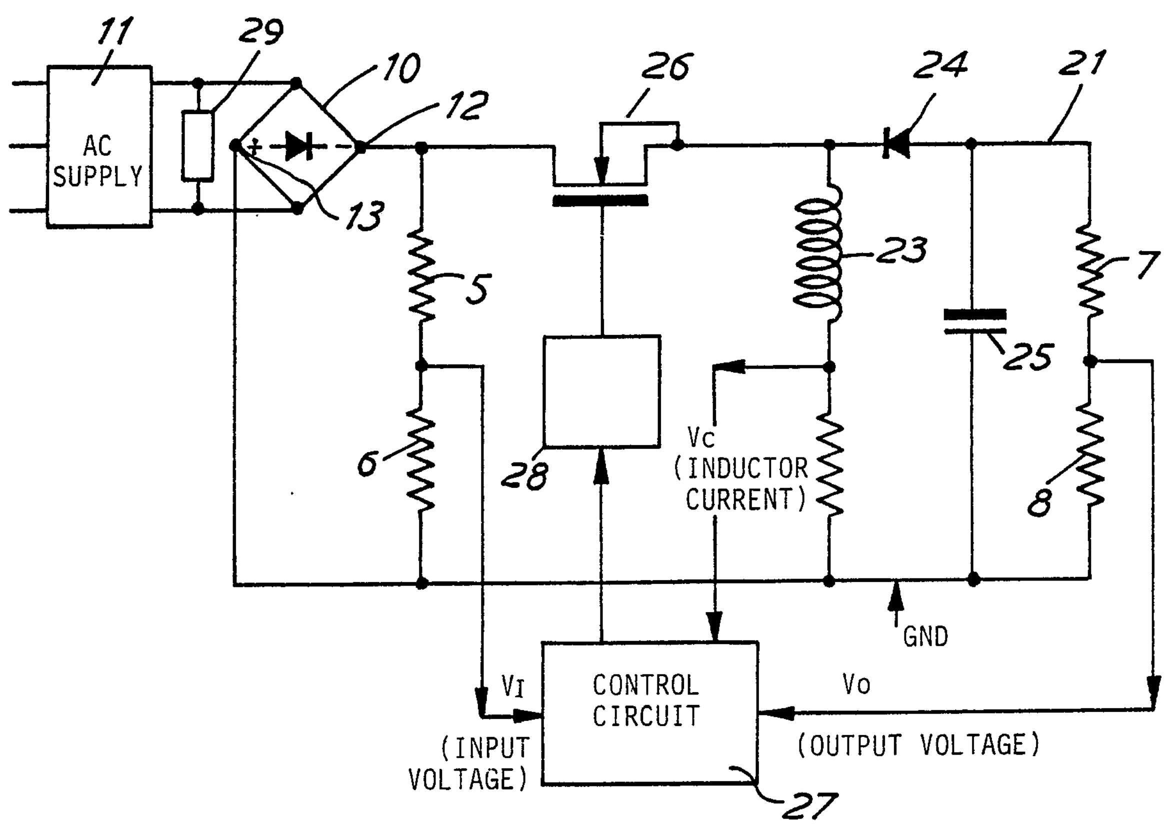


FIG.6.

Neu eingereicht / Newly filed
Nouvellement déposé



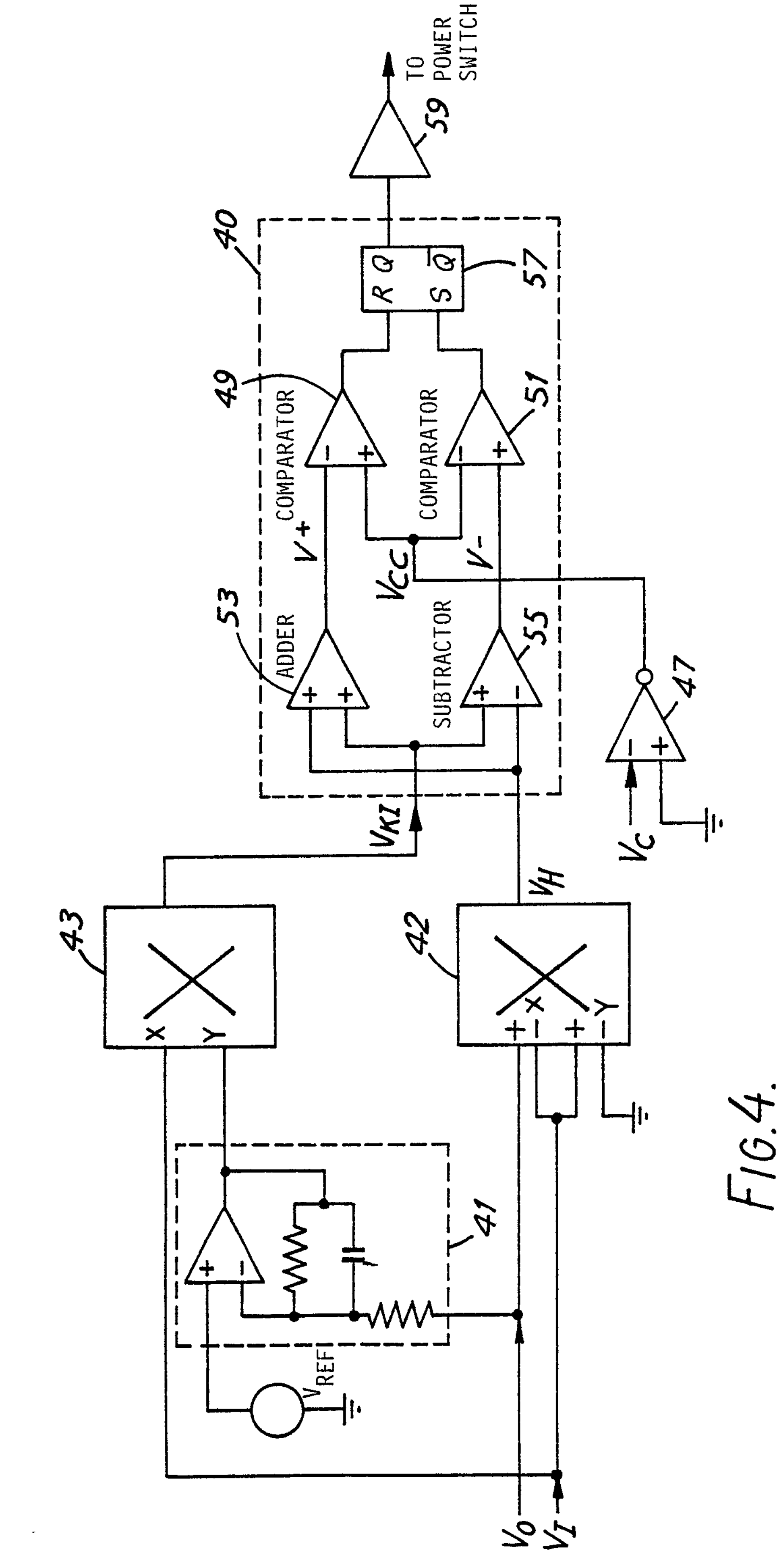


FIG.4.

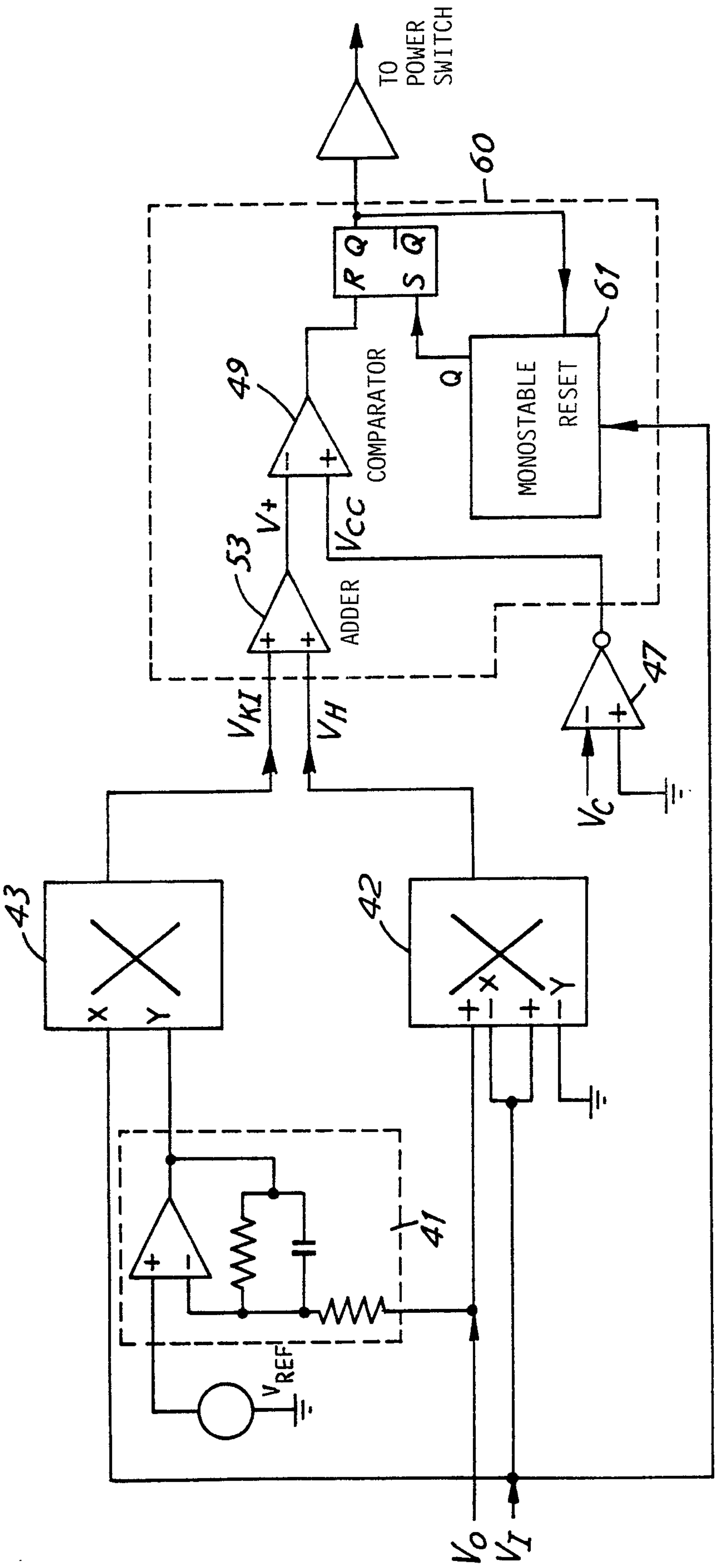
TO POWER SWITCH
60
R Q
S Q̄
61
MONOSTABLE RESET
Q
49
COMPARATOR
53
V+
VCC
ADDER
VKI
VH
47
VC
43
42
X Y
41
VREF
VO
VI

FIG. 5.